# EUROPEAN PATENT APPLICATION

(11) **EP 4 791 084 A1**
(43) Date of publication of application: **12.08.2026**
(21) Application number: 25223776.3
(22) Date of filing: 16.12.2025
(51) Int. Cl.: H04W 40/12, H04W 24/08

(54) **COMMUNICATION DEVICE AND METHOD FOR BACKHAUL LINK OPTIMIZATION**

(30) Priority: 11.02.2025 US 202519050949
(71) Applicant: TP-Link Systems Inc., Irvine, California 92618 (US)
(72) Inventor: PENG, Peng, Shenzhen, 518000 (CN)
(74) Representative: Marks & Clerk LLP

(57) **Abstract**

This disclosure provides a communication device and a method for backhaul link optimization. The communication device includes a memory; and one or more processors coupled to the memory, and configured to: obtain, a channel measuring result of a second communication device on channel(s) used by one or more third communication devices, wherein at least one third communication device uses at least two channels, and wherein the channel measuring result includes measuring results of the at least two channels; determine a total channel quality score of the channel(s) used by each third communication device based on the obtained channel measuring result; and determine, from the one or more third communication device, a target communication device with which the second communication device establishes a backhaul link, based on determined total channel quality score.

## Description

### CROSS REFERENCE TO RELATED APPLICATIONS

This application claims the priority to and benefits of U.S. non-Provisional Patent Application No. 19/050,949, filed on February 11, 2025. The aforementioned patent application is hereby incorporated by reference in its entirety.

### TECHNICAL FIELD

The present disclosure relates to wireless communication, in particular to a communication device and a method for backhaul link optimization.

### BACKGROUND

A wireless mesh network, also known as a multi-hop network, consists of a control node (e.g., a master route) and agent nodes (e.g., slave routes), in which the control node and the agent nodes can be interconnected via a wired link, a wireless link, and a mix of the wired link and the wireless link, to form a unified network. The link between the control node and the agent node and the link between the agent nodes are called the backhaul link. The same channel is used for the backhaul links of the nodes when operating in the same band. The control node is responsible for managing the whole network, and all agent nodes are directly or indirectly connected to it. The control node and the agent nodes can provide service for terminals (e.g., STAs), and the link between the control node or the agent node and the terminal is called the fronthaul link.

In the wireless mesh network, a backhaul link optimization is performed due to the movement, addition, or deletion of agent nodes, so that an agent node connecting an agent node with a poor signal can be reconnected to an agent node with a good signal.

### SUMMARY

Based on the above, the present disclosure provides a communication device, a method, a communication apparatus, a non-transitory computer-readable medium and a computer program product for backhaul link optimization.

In an aspect of the present disclosure, the present disclosure provides a first communication device, comprising: a memory; and one or more processors coupled to the memory, and configured to: obtain, a channel measuring result of a second communication device on channels used by one or more third communication devices, wherein at least one third communication device uses at least two channels, and wherein the channel measuring result includes measuring results of the at least two channels; determine a total channel quality score of the channel(s) used by each third communication device, based on the obtained channel measuring result; and determine, from the one or more third communication devices, a target communication device with which the second communication device establishes a backhaul link, based on the determined total channel quality score.

In yet an aspect of the present disclosure, the present disclosure provides a communication method, comprising: receiving, from a second communication device, a channel measuring result for one or more third communication devices, wherein at least one third communication device uses at least two channels, and wherein the channel measuring result includes measuring results of the at least two channels; determining a total channel quality score of channel(s) used by each third communication device, based on the obtained channel measuring result; and determining, from the one or more third communication devices, a target communication device with which the second communication device establishes a backhaul link, based on the determined total channel quality score.

The present disclosure further provides a non-transitory computer readable medium storing instructions, when executed by a processor, causing the processor to: obtain, a channel measuring result of a second communication device on channel(s) used by one or more third communication devices, wherein at least one third communication device uses at least two channels, and wherein the channel measuring result includes measuring results of the at least two channels; determine a total channel quality score of the channel(s) used by each third communication device, based on the obtained channel measuring result; and determine, from the one or more third communication devices, a target communication device with which the second communication device establishes a backhaul link, based on the determined total channel quality score.

The present disclosure further provides a first communication apparatus, comprising means for performing methods performed by the first communication device as described according to various embodiments in the disclosure.

The present disclosure further provides a computer program product comprising instructions, when executed by a processor causes the processor and a transceiver to perform methods as described according to various embodiments in the disclosure.

### BRIEF DESCRIPTION OF THE DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation to the present disclosure. In the drawings, unless otherwise explicitly indicated, the same reference numerals refer to the same components, steps or elements. In the accompanying drawings,
Fig. 1 shows an example communication system in which a method for backhaul link optimization according to an embodiment of the present disclosure may be applied;
Fig. 2 shows a flow diagram illustrating an example method for backhaul link optimization according to an embodiment of the present disclosure;
Fig. 3 shows an example flow diagram further illustrating step S220 of Fig. 2 for determining the total channel quality score based on the obtained channel measuring result according to an embodiment of the present disclosure;
Fig. 4 shows a flow diagram illustrating another example method for backhaul link optimization according to an embodiment of the present disclosure;
Fig. 5 is a diagram for illustrating a bifurcation problem related to backhaul links;
Fig. 6 is a diagram for illustrating an example interaction between a first communication device and a second communication device with respect to the backhaul link optimization according to an embodiment of the present disclosure;
Fig. 7 is a schematic diagram of a communication device, for example an AP, according to an embodiment of the present disclosure; and
Fig. 8 shows an example configuration of a communication device 800, for example, an AP or non-AP STA device, according to an embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that orientations or positional relationships indicated by terms such as "center", "upper", "lower", "left", "right", "vertical", "horizontal", "inside" and "outside" are based on orientations or positional relationships shown in the drawings, only for the convenience of describing the present disclosure and simplifying the description, instead of indicating or implying the indicated device or element must have a particular orientation. In addition, terms such as "first", "second" and "third" are only for descriptive purposes, whereas cannot be understood as indicating or implying relative importance. Likewise, words like "a", "an" or "the" do not represent a quantity limit, but represent an existence of at least one. Words like "include" or "comprise" mean that an element or an object in front of the said word encompasses those ones listed following the said word and their equivalents, without excluding other elements or objects. Words like "connect" or "link" are not limited to physical or mechanical connections, but may include electrical connections, whether direct or indirect.

In the description of the present disclosure, it should be noted that, unless otherwise explicitly specified and limited, terms such as "mount", "link" and "connect" should be understood in a broad sense. For example, such terms may refer to being fixedly connected, or detachably connected, or integrally connected; may refer to being mechanically connected, or electrically connected; may refer to being directly connected, or indirectly connected via an intermediate medium, or internally connected inside two elements. For ordinary skilled in the art, the specific meanings of the above terms in the present disclosure may be understood on a case-by-case basis.

In addition, technical features involved in different embodiments of the present disclosure described below may be combined with each other as long as no conflicts occurs therebetween. Further, figures are merely for illustration and are simplified for brevity and thus may be not exactly the same as practical implementations. For example, in figures, the processing delay of devices may be omitted.

In the present disclosure, an AP, which may be interchangeably referred to as a wireless access point (WAP), is a communication device that may communicate with a non-AP (e.g., STA) in a WLAN via one or more links and that allows the non-AP to be connected to a wired network. The AP is usually connected to a router (via a wired network) as a standalone device, but it may also be integrated with or employed in the router.

Likewise, in the present disclosure, a non-AP (e.g., a station or terminal, which is interchangeably referred to as an STA) is a communication device that may communicate with an AP via one or more links. The STA may be any device that contains an IEEE 802.11-conformant media access control (MAC) and physical layer (PHY) interface to the wireless medium (WM). For example, an STA may be a laptop, a desktop personal computer (PC), a personal digital assistant (PDA), an access point, or a Wi-Fi phone in a WLAN environment. The STA may be fixed or mobile. In the WLAN environment, the terms "STA", "terminal", "wireless terminal", "user", "user device", and "node" are often used interchangeably.

In the present disclosure, a STA in a WLAN may work as an AP at a different occasion, and vice versa. Additionally, a device (e.g., the STA or the AP) may have both the STA mode and the AP mode, and thus the device may work in the STA mode and AP mode simultaneously. This is because communication devices in the context of IEEE 802.11 (Wi-Fi) technologies may include both STA hardware components and AP hardware components. In various embodiments below, a non-AP STA may refer to an STA or terminal in a WLAN that is not implemented as an AP.

In the current backhaul link optimization in the wireless mesh network, the control node determines the target node for an agent node based on the link quality information of a single link (i.e., channel) in one band, so as to connect to the target node via a single backhaul link. This current backhaul link optimization may be unfriendly to a communication device in the mesh network that supports multi-backhaul links simultaneously (which may be called a multi-backhaul links device), since this optimization causes the high throughput advantage of multi-backhaul links is not used, which may cause the user to have a poor user experience.

Based on the above, the disclosure provides a communication device, a method, a communication apparatus, a non-transitory computer-readable medium, and a computer program product for backhaul link optimization (i.e., determining a target communication device with which a multi-backhaul link device establishes a backhaul link). The techniques (i.e., the method, communication device and the like) disclosed by the present application may determine the target communication device with which a multi-backhaul link device establishes backhaul link(s) based on a total channel quality score of more than one channels, instead of the channel quality of only one channel, which may cause the multi-backhaul link device may connect to the target communication device via more than one backhaul links, so that the high throughput advantage of the multi-backhaul links may be used, thereby improving the user experience. The techniques disclosed by the present application are particularly applicable to a mesh network in which the communication device (e.g., an AP) supports multi-backhaul links simultaneously.

Note, that although the above disclosure is described with reference to the wireless mesh network, it is not a limitation. The method provided by the disclosure may be applied to any communication system in which a part or all communication devices are multi-backhaul link communication devices.

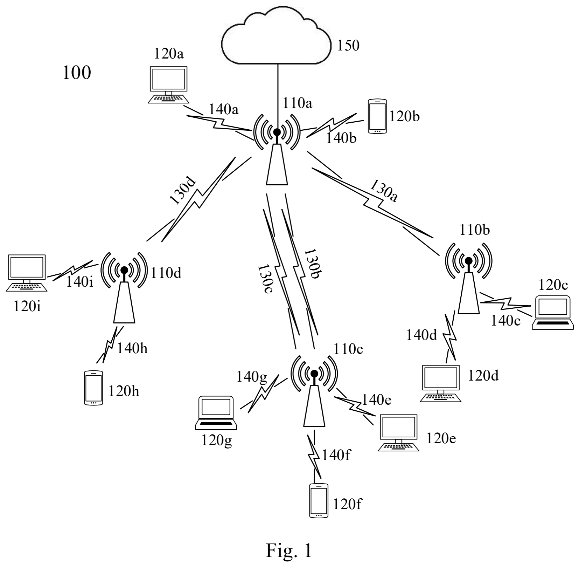

Fig. 1 shows an example communication system 100 in which the method for backhaul link optimization according to an embodiment of the present disclosure may be applied. As shown in Fig. 1, the communication system 100 may comprise several communication devices (e.g., APs and terminals). The communication devices 110a, 110b, 110c, and 110d may be interconnected via a wireless link to form a unified communication network. For example, the communication devices 110a and 110c support two backhaul links simultaneously and the communication device 110c may be connected to the communication device 110a via backhaul links 130b and 130c. One of the communication devices 110a, 110b, 110c, and 110d may connect to an external network 150 (such as the internet), so that the formed unified communication network may connect to the external network. Each of the communication devices 110a-110d may connect to one or more terminal devices and provides services for the terminal devices. For example, as shown in Fig.1, terminal devices 120a and 120b are connected to the communication device 110a via fronthaul links 140a and 140b respectively. Terminal devices 120c and 120d are connected to the communication device 110b via fronthaul links 140c and 140d respectively. Terminal devices 120e, 120f, and 120g are connected to the communication device 110c via fronthaul links 140e, 140f, and 140g respectively. Terminal devices 120h and 120i are connected to the communication device 110d via fronthaul links 140h and 140i respectively.

Notably, the communication system 100 shown in Fig. 1 is just an example, rather than a limitation. For example, although Fig. 1 shows four communication devices, the communication system in which the method of the present disclosure may be applied may comprise more or fewer communication devices.

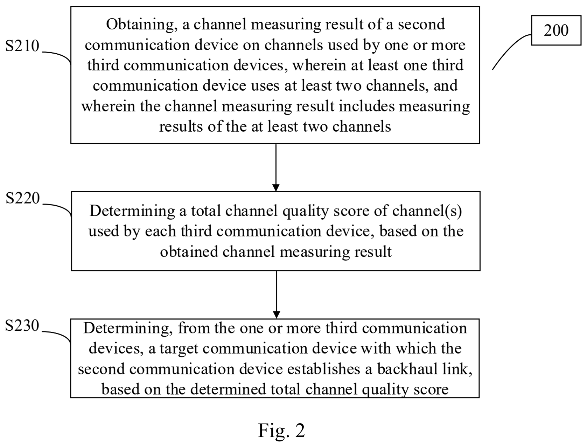

Fig. 2 shows a flow diagram illustrating example method 200 for backhaul link optimization according to an embodiment of the present disclosure. This method may be performed by any communication device (i.e., a first communication device) which may establish a backhaul link with another communication device in the communication system. Exemplarily, this method 200 may be performed by a communication device for controlling the communication system (e.g., the control node in the mesh network). Alternatively, this method 200 may be performed by a communication device controlled by a control device in the communication system (e.g., the agent node controlled by the control node in the mesh network). This method 200 may be performed when the network environment of the communication system changes, for example, a new communication device joins the communication system, or a communication device requests to perform the backhaul link optimization due to the degradation of channel quality.

As shown in Fig. 2, the method 200 starts at block S210. At block S210, a channel measuring result of a second communication device on channel(s) used by one or more third communication devices is obtained. In this disclosure, the first communication device and the second communication device may be different devices or the same device. In a case where the first communication device is different from the second communication device (e.g., the first communication device is the control node and the second communication device is the agent node in the network), obtaining the channel measuring result may comprise receiving the channel measuring result from the second communication device. In a case where the first communication device and the second communication device are the same device (e.g., the first communication device and the second communication device both are the agent node in the network), obtaining the channel measuring result may comprise performing, for each of the one or more third communication devices, a channel measuring of the channel(s).

At least one third communication device may use at least two channels, and thus the channel measuring result may include measuring results of the at least two channels. Additionally, some third communication devices may use one channel, and thus the channel measuring result may include a measuring result of the one channel. In some cases, the one or more third communication devices may comprise the first communication device. A measuring result of a channel used by each third communication device may be obtained by measuring a signal (such as a beacon frame) transmitted by the third communication over the channel. Thus, the measuring result associated with one channel may be a set of results for measuring respective signals transmitted by respective third communication devices over the one channel. The measuring result of each channel may include information indicating channel quality (e.g., RSSI) and information indicating a channel occupancy ratio, and the like.

The channel measuring result may include other information, for example, information for identifying the measuring result belonging to which communication device. Examples of this information may be an identifier of the communication device or link interface identifier(s) of the communication device (e.g., a basic service set identifier (BSSID)). In this disclosure, the link interface identifier indicates the link interface for establishing the backhaul link.

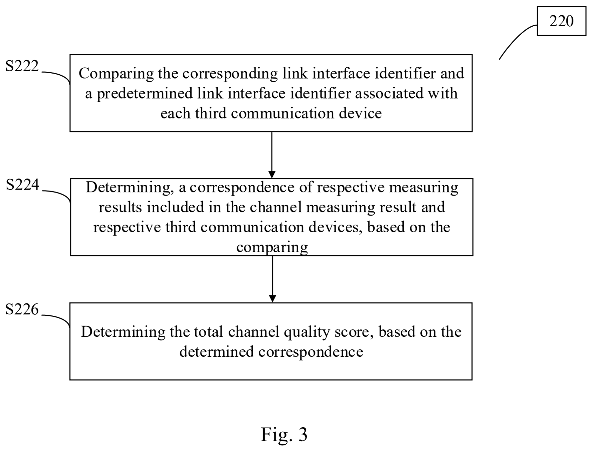

The first communication device may determine each measuring result included in the channel measuring result belongs to which third communication device based on the identifier of the communication device in an embodiment. In another embodiment, the first communication device may determine each measuring result included in the channel measuring result belongs to which third communication device based on the link interface identifier(s) of the communication device, which will be described in detail below with reference to Fig. 3.

The second communication device may be a multi-backhaul link device, each link of which may correspond to a channel, thereby using multiple channels. The multiple channels may be located in multiple bands respectively. Alternatively, part or all of the multiple channels may be located in the same band. For example, if three backhaul links are supported by a multi-backhaul link device, and the multi-backhaul link device supports the bands 2.4GHz, 5GHz and 6GHz. The three channels corresponding to the three backhaul links may be located in the bands 2.4GHz, 5GHz and 6GHz respectively. Alternatively, the three channels may located in one or two of the bands 2.4GHz, 5GHz and 6GHz. For example, two channels are located in the band 2.4GHz, and one channel is located in the band 5GHz.

In a case where the channel measuring result is received from the second communication device, the channel measuring result may be received through a single message (e.g., a package). Alternatively, the channel measuring result may be received through a plurality of messages, each including a package of all measuring results associated with a corresponding channel of the multiple channels (e.g., at least two channels). Additionally and optionally, before receiving the channel measuring result, the first communication device may transmit a measuring request to the second communication device. For example, when a new communication device joins the communication system, the first communication device may transmit a channel measuring request to the second communication device (which may be near the new communication device). In this case, the first communication device may transmit a single channel measuring request for all channels that need to be measured. Alternatively, the first communication device may transmit one channel measuring request for each of the all channels.

Returning to Fig. 2, at block S220, a total channel quality score of the channel(s) used by each third communication device is determined, based on the obtained channel measuring result. For the third communication device using at least two channels, the total channel quality score may be a sum of respective channel quality scores of respective channels. For the third communication device using only one channel, the total channel quality score may be the channel quality scores of the one channel. The details of determining the channel quality score will be described below with reference to Fig. 3.

At block S230, a target communication device with which the second communication device establishes a backhaul link is determined from the one or more third communication devices, based on the determined total channel quality score. Exemplarily, a third communication device with the highest total channel quality score may be determined as the target communication device.

Since the method described above with reference to Fig. 2 determines the target communication device with which a multi-backhaul link device establishes a backhaul link(s) based on a total channel quality score of more than one channels, which may enable that the multi-backhaul link device may connect to the target communication device via more than one backhaul links, so that the high throughput advantage of the multi-backhaul links may be used, thereby improving the user experience.

Fig. 3 shows an example flow diagram further illustrating step S220 of Fig. 2 for determining the total channel quality score based on the obtained channel measuring result according to an embodiment of the present disclosure. In this method, the channel measuring result includes a corresponding link interface identifier associated with each measuring result.

At block S222, the corresponding link interface identifier is compared with a predetermined link interface identifier associated with each third communication device. The corresponding link interface identifier may be obtained by the second communication device from a signal (e.g., a beacon frame) for measuring, which is transmitted by the third communication device. The first communication device may predetermine the link interface identifier(s) associated with each third communication device by message interaction. Specifically, the first communication device may transmit a topology query to each third communication device. Each third communication device may reply with a topology response. The topology response may include the BSS information (e.g., (Radio 1, BSSID 1, SSID 1), (Radio 2, BSSID 2, SSID 2), etc.) of the third communication device. The BSSID(s) may be the link interface identifier(s) of the third communication device.

Additionally, in a case where different channels corresponding to different backhaul links are located in different bands, the first communication device may obtain the specific band(s) of the Radio(s) by further message interaction. Specifically, the first communication device may transmit an AP capability query to the third communication device. The third communication device may reply with an AP capability report. The AP Capability Report message includes Radio band information, indicating whether the Radio is 2.4GHz, 5GHz or 6GHz, etc., so that the first communication device may obtain the specific band corresponding to the Radio.

At block S224, a correspondence of respective measuring results included in the channel measuring result and respective third communication devices is determined based on the comparing at block S222, so that it is determined each measuring result included in the channel measuring result belongs to which third communication device. Determining that each measuring result belongs to which third communication device based on the link interface identifier may use the existing signaling structure fully, compared to determining that each measuring result belongs to which third communication device based on the identifier of the communication device. This is because, in the current signaling structure, the identifier of the communication device is not included in the signal (e.g., the beacon frame) for channel measuring.

Exemplarily, assuming the channel measuring result includes (BSSID 1, measuring result 1), (BSSID 2, measuring result 2), (BSSID 3, measuring result 3), (BSSID 4, measuring result 4), (BSSID 5, measuring result 5), (BSSID 6, measuring result 6), (BSSID 7, measuring result 7), (BSSID 8, measuring result 8), (BSSID 9, measuring result 9), (BSSID 10, measuring result 10), the predetermined link interface identifier associated with each third communication device is (Device 1, BSSID 1, BSSID 3), (Device 2, BSSID 5), (Device 3, BSSID 2, BSSID 6), (Device 4, BSSID 4, BSSID 9), (Device 5, BSSID 7, BSSID 10), (Device 6, BSSID 8), based on the comparing at block S222, it may be determined that measuring results 1 and 3 correspond to Device 1, measuring result 5 corresponds to Device 2, measuring results 2 and 6 correspond to Device 3, measuring results 4 and 9 correspond to Device 4, measuring results 7 and 10 correspond to Device 5, and measuring result 8 corresponds to Device 6.

At block S226, the total channel quality score is determined, based on the determined correspondence. That is, the total channel quality score of the channel(s) used by the third communication device is determined based on measuring result(s) included in the channel measuring result belonging to the third communication device. Exemplarily, in a case where the measuring result includes information indicating channel quality (e.g., RSSI) and information indicating a channel occupancy ratio, in one embodiment, this determination may comprise determining a channel quality score of each channel based on the information indicating the channel quality, and the information indicating the channel occupancy ratio by:
${S}_{i} = {f}_{i} \left({r}_{i}\right) {U}_{i}$
where *Sᵢ* indicates the channel quality score of channel *i, i=1...N, N* is the total number of the channels related to one third communication device whose measuring results included in the channel measuring result (for the third communication device using one channel described above, *N=*1)*, rᵢ* indicates the RSSI of channel *i, fᵢ*(*rᵢ*) is a function of *rᵢ* (e.g., *fᵢ*(*rᵢ*) = *rᵢ*)*, Uᵢ* indicates the channel occupancy ratio of channel *i*.

In another embodiment, in addition to considering the channel quality (e.g., RSSI) and the channel occupancy ratio to determine the channel quality score of each channel by using the above equation (1), which is similar to the currently used method for determining the channel quality score of the channel, a base channel rate of the third communication device may be considered. The base channel rate may be determined based on at least one of a number of antennas, a channel bandwidth, and a wireless mode (i.e., mode a/b/g/n/ac/ax etc.) of the third communication device. With further considering the base channel rate which may indicate the theory rate of the wireless link, a more accurate channel quality score may be determined. In this case, exemplarily, the channel quality score of each channel may be determined by:
${S}_{i} = {f}_{i} \left({r}_{i}\right) {U}_{i} {R}_{i}$
where *Sᵢ, i, rᵢ, fᵢ*(*rᵢ*) and *Uᵢ* are the same as those in equation (i), *Rᵢ* indicates the base channel rate.

As an example but not a limitation, *Rᵢ* may be determined based on a predefined mapping of at least one of the number of antennas, the channel bandwidth, and the wireless mode to *Rᵢ*. The predefined mapping may be determined by experiment.

At block S226, a sum of the channel quality score of each channel is determined by equation (3), as the total channel quality score,
$S = {\sum }_{i = 1}^{N} {S}_{i}$
where *S* indicates the total channel quality score, *Sᵢ* indicates the channel quality score of channel *i, N* is the total number of the related channels as described above. Then, the third communication device with the highest *S* may be determined as the target communication device.

Additionally and optionally, the method of the disclosure may further comprise determining which communication device in the communication system is a multi-backhaul link device. Exemplarily, for a communication device in a communication system formed based on the EasyMesh protocol stack which is an example but not a limitation, this determination may comprise determining that the (e.g., the second) communication device supports at least two backhaul links simultaneously, by identifying that a message received from the communication device indicates at least two neighbor devices and that media access control (MAC) addresses of the at least two neighbor devices are the same. Further, the specific multiple bands (e.g., 2.4GHz, 5GHz or 6GHz) supported by the communication device may be determined, based on the MAC addresses of the communication device included in the message.

In this disclosure, since the first communication device and the second communication device may be different devices or the same device as described above, after determining the target communication device, different operations may be performed depending on whether the first communication device and the second communication device are the same device.

Specifically, in a case where the first communication device and the second communication device are the same device, after determining the target communication device at block S230, the first communication device may perform a connection with link interfaces associated with the determined target communication device.

In a case where the first communication is different from the second communication, after determining the target communication device at block S230, the first communication device may transmit a request for the second communication device to establish the backhaul link with the target communication device. The request may include information for identifying the target communication device, e.g., the identifier of the target communication device or link interface identifier(s) of the target communication device. In an embodiment, the request may be a single request, including the identifier of the target communication device or link interface identifier(s) related to all backhaul link(s) to be established between the second communication device and the target communication device. In another embodiment, the request may be a plurality of requests respectively corresponding to all the backhaul links to be established. Each request may include one link interface identifier related to one corresponding link. The first communication device may transmit the plurality of requests within a predefined time period. This predefined time period may be known by both the first and second communication devices by presetting or message interaction. In this manner, the current request used for the establishment of a single backhaul link may be reused. After receiving the request, the second communication device may perform a connection with link interfaces associated with the determined target communication device.

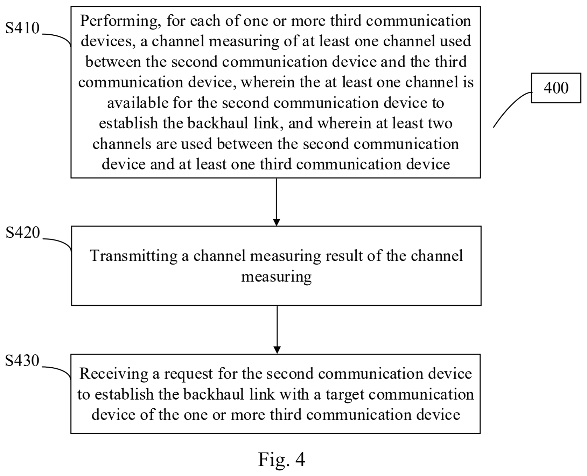

Fig. 4 shows a flow diagram illustrating another example method 400 for backhaul link optimization according to an embodiment of the present disclosure. The method 400 is the method that may be performed by the second communication device in a case where the first communication is different from the second communication. The second communication may support at least two backhaul links simultaneously (i.e., a multi-backhaul link device).

As shown in Fig. 4, at block S410, for each of one or more third communication devices, a channel measuring of channel(s) used between the second communication device and the third communication device is performed. The channel(s) is available for the second communication device to establish the backhaul link, and at least two channels are used between the second communication device and at least one third communication device. The channel measuring may be passive measuring, in which the second communication device measures a signal (such as the beacon frame) periodically transmitted by the third communication device over a channel. Alternatively, the channel measuring may be active measuring, in which the second communication device transmits a request for requesting the third communication device to transmit a signal for the channel measuring; and the second communication device performs the channel measuring based on the signal. In this case, the request may indicate the specific signal to be requested (e.g., the type of the signal), so that the channel measuring may be specific to the request. Compared with the passive measuring, by the active measuring, the second communication device may request the third communication device to transmit a specific signal for measuring according to its requirements, which may facilitate the backhaul link optimization of the second communication device.

Exemplarily, for a better understanding of step S410, this disclosure provides a specific example below. In this specific example, the following assumptions are made. The communication device 110c in Fig. 1 is the second communication device needing backhaul link optimization and supports two bands 2.4GHz and 5GHz used for the backhaul links. The communication device 110a supports bands 2.4GHz, 5GHz and 6GHz used for the backhaul links and uses three channels for the backhaul links which are located in bands 2.4GHz, 5GHz, and 6GHz respectively (e.g., to transmit the beacon frames). The communication device 110b supports band 2.4GHz used for the backhaul link and uses one channel for the backhaul link which is located in band 2.4GHz. The communication device 110d supports bands 2.4GHz, and 5GHz used for the backhaul links and uses two channels for backhaul links which are located in bands 2.4GHz and 5GHz respectively. The communication device 110c measures (i.e., the signal transmitted over) channels respectively located in bands 2.4GHz and 5GHz used by the communication device 110a, but does not measure the channel located in band 6GHz, since the channel located in band 6GHz is not available for the communication device 110c which does not support band 6GHz. Similarly, the communication device 110c measures the channel located in band 2.4GHz used by the communication device 110b, and the channels respectively located in bands 2.4GHz and 5GHz used by the communication device 110d.

At block S420, a channel measuring result of the channel measuring is transmitted. The contents of the channel measuring result are the same as those described above, which is not repeated here for brevity. As described above, the channel measuring result may be transmitted via a single message or a plurality of messages, each corresponding to a package of all measuring results associated with one channel.

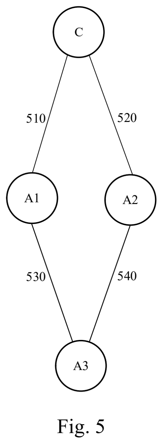

At block S430, a request for the second communication device to establish the backhaul link with a target communication device of the one or more third communication device is received. As described above, the request may be a single request including an identifier of the target communication device or all link interface identifiers related to all backhaul links to be established. Alternatively, the request may be more than one request, each including one link interface identifier related to a corresponding backhaul link of all backhaul links to be established. In an embodiment, the request may be received through the timeout timing. Specifically, the receiving may comprise initiating a timer after receiving a first request; and continuing to receive subsequent requests till an expiration of the timer. This timer may be set based on the predefined time period within which the requests are transmitted described above. Thereafter, the second communication device may perform a connection with link interfaces (i.e., the target link interfaces) identified by link interface identifiers included in the received requests simultaneously. Additionally, the performance of the connection may further comprise disconnecting all previous backhaul link connection(s) if exist. In this manner, since when connecting to the target communication device, all the previous backhaul link connection(s) are disconnected and then the connection to all target link interfaces are performed simultaneously, a bifurcation problem of a backhaul link from the second communication device to the control communication device (e.g., the first communication device) which is shown in Fig. 5 may be avoided.

As shown in Fig. 5, since the communication device A3 connects to the control communication device C via more than one communication device A1 and A2, there is a bifurcation problem for the communication device A3. The bifurcation problem may cause a problem in the data transmission of the communication device A3, since in the mesh network, the data generally needs to be transferred to the network (such as the internet) via the control communication device. Specifically, for the communication device A3 in Fig. 5, if it transmits data of different redundant versions via backhaul links 530 and 540, both the communication devices A1 and A2 only receive part of the data, which causes neither the communication device A1 nor A2 to decode the data correctly.

Note that the method described above with reference to Fig.4 and performed by the second communication device which is different from the first communication device may also apply to the first communication device as long as there is no contradiction therebetween.

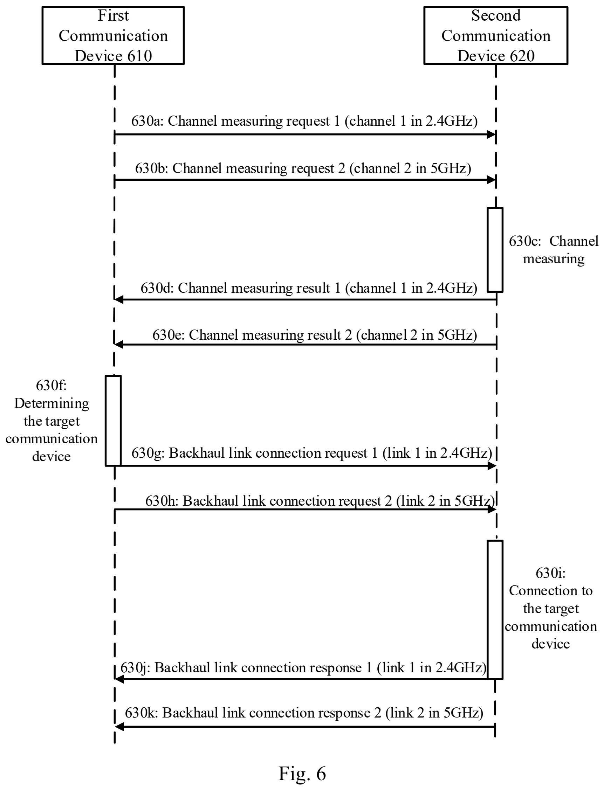

Fig. 6 is a diagram for illustrating an example interaction between a first communication device and a second communication device with respect to the backhaul link optimization according to an embodiment of the present disclosure. In the example interaction of Fig. 6, the first communication device is different from the second communication device. In Fig. 6, it is assumed that the second communication device 620 supports two backhaul links simultaneously in bands 2.4GHz and 5GHz.

As shown in Fig. 6, when the first communication device determines the second communication needs to perform the backhaul link optimization, the first communication device 610 may transmit channel measuring requests 1 and 2, which may indicate channels 1 and 2 located in bands 2.4GHz and 5GHz respectively (steps 630a and 630b). After receiving requests 1 and 2, the second communication device may perform a channel measuring (step 630c). This channel measuring may be performed through measuring, by the second communication device, beacon frames transmitted by one or more third communication devices (not shown) over channels 1 and/or 2. Then, the second communication device may transmit the channel measuring results 1 and 2, including the packages of all measuring results associated with channels 1 and 2 respectively (steps 630d and 630e). After receiving the channel measuring results 1 and 2, the first communication device 610 may determine the target communication device based on the channel measuring results 1 and 2, according to the method described above (step 630f). Then, the first communication device 610 may transmit backhaul link connection requests 1 and 2, which may identify backhaul link interfaces of links 1 and 2 (steps 630g and 630h). Then, the second communication device may perform a connection to the target communication device (step 630i). After connecting to the target communication device, the second communication device may transmit backhaul link connection responses 1 and 2 to the first communication device 610 (steps 630j and 630k). Thereafter, the backhaul link optimization of the second communication device 620 is completed.

Note, the example interaction between the first communication device 610 and the second communication device 620 shown in Fig. 6 is merely an example but not a limitation. For example, although in Fig. 6, the first communication device may transmit two channels measuring requests 1 and 2 indicating channels 1 and 2 respectively, the first communication device may transmit only one channel measuring request indicating both channels 1 and 2.

In the above disclosure, the method for backhaul link optimization performed by the first and second communication devices is described with reference to Figs. 2-6. The provided method may determine the target communication device with which a multi-backhaul link device to establish a backhaul link(s) based on a total channel quality score of more than one channels, which may cause the multi-backhaul link device may connect to the target communication device via more than one backhaul links, so that the high throughput advantage of the multi-backhaul links may be used, thereby improving the user experience. When computing the channel quality score, in addition to the channel quality (e.g., RSSI) and the channel occupancy ratio, the provided method further considers the base channel rate determined based on at least one of the number of antennas, the channel bandwidth, and the wireless mode, so that a more accurate channel quality score may be determined, thereby facilitating the determination of a more suitable target communication device. In addition, in the provided method, since when connecting to the target communication device, all the previous backhaul link connection(s) (if exist) are disconnected and then the connection to all target link interfaces is performed simultaneously, a bifurcation problem of backhaul link as described may be avoided.

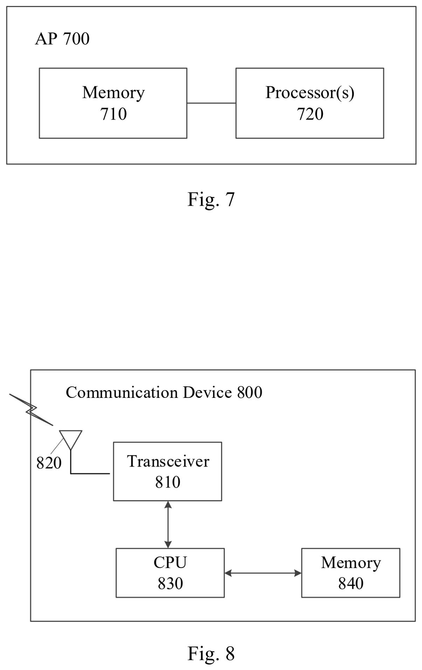

In the following, a communication device and apparatus for backhaul link optimization are described with reference to Figs. 7-8.

Fig. 7 is a schematic diagram of a communication device 700, for example an AP, according to an embodiment of the present disclosure. As shown in Fig. 7, the communication device 700 may comprise a memory 710, and a processor(s) 720. The processor(s) 720 may be operatively coupled to the memory 710. Exemplarily, the memory 710 may store instructions and data (e.g., produced during the processor performs method (e.g., methods 200 and/or 400) described according to embodiments in the disclosure). For example, in a case where the communication device 700 is used as the first communication device, the processor 720 may be configured to obtain, a channel measuring result of a second communication device on channel(s) used by one or more third communication devices, wherein at least one third communication device uses at least two channels, and wherein the channel measuring result includes measuring results of the at least two channels; determine a total channel quality score of the channel(s) used by each third communication device, based on the obtained channel measuring result; and determine, from the one or more third communication devices, a target communication device with which the second communication device establishes a backhaul link, based on the determined total channel quality score.

In a case where the communication device 700 is used as the second communication device which is different from the first communication device and supports at least two backhaul links simultaneously, the processor 720 may be configured to perform, for each of one or more third communication devices, a channel measuring of channel(s) used between the second communication device and the third communication device, wherein the channel(s) is available for the second communication device to establish the backhaul link, and wherein at least two channels are used between the second communication device and at least one third communication device; transmit a channel measuring result of the channel measuring; and receive a request for the second communication device to establish the backhaul link with a target communication device of the one or more third communication device. In addition, the memory 710 and/or the processor may be further configured to perform other operations described above with reference to Figs. 2-6, as long as there is no contradiction among these operations.

Moreover, the communication device 700 may further comprise a receiver and a transmitter (not shown). The receiver and the transmitter may be communicatively coupled with the processor 710. The receiver and the transmitter may be separate components or may be integrated into a transceiver.

Fig. 8 shows an example configuration of a communication device 800, for example, an AP or non-AP STA device, according to an embodiment of the present disclosure. The communication device 800 may include a transceiver 810, at least one antenna 820 (for the sake of simplicity, only one antenna is shown in Fig. 8), a central processing unit (CPU) 830 and at least one memory 840. The transceiver 810 may be used to establish a link (a backhaul link or a fronthaul link) and transmit/receive signal over a channel of the link via the antenna 820. The transceiver 810 and the CPU 830 may function together as a circuit of the communication device 800 configured to perform methods (e.g., methods 200 and 400) as described in the present disclosure. It should be understood that the configuration of the communication device shown in Fig. 8 is merely as example, but not a limitation. The configuration of the communication device in the present disclosure may comprise more or less components than those in Fig. 8.

In addition, the present disclosure further provides a first communication apparatus comprising means for the methods for backhaul link optimization (e.g., the method 200) performed by the first communication device according to any embodiments of the present disclosure. Exemplarily, the first communication apparatus may comprise: mean for obtaining, a channel measuring result of a second communication device on channel(s) used by one or more third communication devices, wherein at least one third communication device uses at least two channels, and wherein the channel measuring result includes measuring results of the at least two channels; means for determining a total channel quality score of channel(s) used by each third communication device, based on the obtained channel measuring result; and means for determining, from the one or more third communication devices, a target communication device with which the second communication device establishes a backhaul link, based on the determined total channel quality score. In addition, the first communication apparatus may comprise other means for performing other operations described above with reference to Figs. 2-4 and 6, as long as there is no contradiction among these means.

In addition, the present disclosure further provides a second communication apparatus comprising means for the methods for backhaul link optimization (e.g., the method 400) performed by the second communication device according to any embodiments of the present disclosure. Exemplarily, the second communication apparatus may comprise: means for performing, for each of one or more third communication devices, a channel measuring of channel(s) used between the second communication device and the third communication device, wherein the channel(s) is available for the second communication device to establish the backhaul link, and wherein at least two channels are used between the second communication device and at least one third communication device; means for transmitting a channel measuring result of the channel measuring; and means for receiving a request for the second communication device to establish the backhaul link with a target communication device of the one or more third communication device. In addition, the second communication apparatus may comprise other means for performing other operations described above with reference to Figs. 2-4 and 6, as long as there is no contradiction among these means.

In addition, the present disclosure further provides a non-transitory computer readable storage medium storing a computer program thereon which, when being executed by a processor, implements the method for backhaul link optimization (e.g., the methods 200 and/or 400) according to any embodiment of the present disclosure.

In addition, the present disclosure further provides a computer program product storing instructions which, when being executed by a processor, implements the method for backhaul link optimization (e.g., the methods 200 and/or 400) according to any embodiment of the present disclosure.

So far, the present disclosure has disclosed the method for backhaul link optimization, the communication device (e.g., AP), the communication apparatus, the non-transitory computer readable storage medium and the computer program product for the method. The provided method, the communication device and the communication apparatus may determine the target communication device with which a multi-backhaul link device to establish a backhaul link(s) based on a total channel quality score of more than one channels, which may cause the multi-backhaul link device may connect to the target communication device via more than one backhaul links, so that the high throughput advantage of the multi-backhaul links may be used, thereby improving the user experience. When computing the channel quality score, in addition to the channel quality (e.g., RSSI) and the channel occupancy ratio, the provided method further considers the base channel rate determined based on at least one of the number of antennas, the channel bandwidth, and the wireless mode, so that a more accurate channel quality score may be determined, thereby facilitating the determination of a more suitable target communication device. In addition, in the provided method, since when connecting to the target communication device, all the previous backhaul link connection(s) (if exist) are disconnected and then the connection to all target link interfaces is performed simultaneously, a bifurcation problem of backhaul link as described may be avoided.

It should be noted that the above description is only some embodiments of the present disclosure and an illustration of the applied technical principles. It should be understood by those skilled in the art that the present disclosure scope involved in the present disclosure is not limited to the technical solutions resulted from specific combinations of the above technical features, but also encompasses other technical solutions resulted from any combination of the above technical features or their equivalents without departing from the above disclosed concept, for example, the technical solutions formed by replacing between the above features and the technical features with similar functions disclosed in the present disclosure (but not limited thereto).

In addition, although the operations are depicted in a specific order, this should not be understood as requiring these operations to be performed in the specific order shown or in a sequential order. In certain circumstances, multitasking and parallel processing may be beneficial. Likewise, although several specific implementation details are included in the above discussion, these should not be interpreted as limiting the scope of the present disclosure. Some features described in the context of separate embodiments may also be implemented in a single embodiment in combination. On the contrary, various features described in the context of a single embodiment may also be implemented in multiple embodiments alone or in any suitable subcombination.

Although the subject matter has been described in a language specific to structural features and/or logical acts of methods, it should be understood that the subject matter defined in the appended claims is not necessarily limited to the specific features or acts described above. On the contrary, the specific features and actions described above are merely example forms of implementing the claims.

## Claims

1. A first communication device comprising:
a memory; and
one or more processors coupled to the memory, and configured to:
obtain, a channel measuring result of a second communication device on channel(s) used by one or more third communication devices, wherein at least one third communication device uses at least two channels, and wherein the channel measuring result includes measuring results of the at least two channels;
determine a total channel quality score of the channel(s) used by each third communication device, based on the obtained channel measuring result; and
determine, from the one or more third communication devices, a target communication device with which the second communication device establishes a backhaul link, based on the determined total channel quality score.

2. The first communication device of claim 1, wherein the channel measuring result includes a corresponding link interface identifier associated with each measuring result, and wherein to determine the total channel quality score, the one or more processors are configured to:
compare the corresponding link interface identifier and a predetermined link interface identifier associated with each third communication device;
determine, a correspondence of respective measuring results included in the channel measuring result and respective third communication devices, based on the comparing, and
determine the total channel quality score, based on the determined correspondence,
optionally, wherein the link interface identifier is a basic service set identifier (BSSID).

3. The first communication device of claim 1 or 2, wherein the channel measuring result includes information indicating channel quality and information indicating a channel occupancy ratio, and wherein to determine the total channel quality score, the one or more processors are configured to:
determine a channel quality score of each channel based on the information indicating the channel quality, the information indicating the channel occupancy ratio, and a base channel rate; and
determine a sum of the channel quality score of each channel as the total channel quality score,
wherein the base channel rate is based on at least one of a number of antennas, a channel bandwidth, and a wireless mode of the third communication device.

4. The first communication device of any one of claims 1-3, wherein the first communication device is different from the second communication device, and wherein obtaining the channel measuring result comprises receiving the channel measuring result from the second communication device.
optionally, wherein to receive the channel measuring result, the one or more processors are configured to receive a package of all measuring results associated with each channel.

5. The first communication device of claim 4, wherein the one or more processors are further configured to:
determine that the second communication device supports at least two backhaul links simultaneously, by identifying that a message received from the second communication device indicates at least two neighbor devices and that media access control (MAC) addresses of the at least two neighbor devices are the same; and
determine bands respectively corresponding to the at least two backhaul links, based on the MAC addresses of the second communication device included in the message.

6. The first communication device of claim 4 or 5, wherein the one or more processors are further configured to transmit a request for the second communication device to establish the backhaul link with the target communication device,
optionally, wherein the backhaul link includes at least two backhaul links, and wherein to transmit the request, the one or more processors are configured to:
transmit at least two requests respectively corresponding to the at least two backhaul links within a predefined time period.

7. The first communication device of claim 6, wherein the second communication device is configured to:
initiate a timer after receiving a first request; and
continue to receive subsequent requests till an expiration of the timer; and
perform a connection with link interfaces identified by link interface identifiers included in the received requests simultaneously.

8. The first communication device of any of claims 4-7, wherein the one or more processors are further configured to transmit a channel measuring request for each of the channel(s).

9. The first communication device of any one of claim 1-8, wherein the at least two channels are located in at least two bands respectively, wherein the first communication device and the second communication device are the same communication device, and wherein obtaining the channel measuring result comprises: performing, for each of the one or more third communication devices, a channel measuring of the channel(s),
optionally, wherein the one or more processors are further configured to: perform a connection with a link interface of the determined target communication device.

10. The first communication device of claim 9, wherein to perform the channel measuring, the one or more processors are configured to:
transmit a request for the third communication device to transmit a signal for the channel measuring; and
perform the channel measuring based on the signal.

11. A communication method comprising:
obtaining, a channel measuring result of a second communication device on channel(s) used by one or more third communication devices, wherein at least one third communication device uses at least two channels, and wherein the channel measuring result includes measuring results of the at least two channels;
determining a total channel quality score of the channel(s) used by each third communication device, based on the obtained channel measuring result; and
determining, from the one or more third communication devices, a target communication device with which the second communication device establishes a backhaul link, based on the determined total channel quality score.

12. The communication method of claim 11, wherein the channel measuring result includes a corresponding link interface identifier associated with each measuring result, and wherein determining the total channel quality score comprises:
comparing the corresponding link interface identifier and a predetermined link interface identifier associated with each third communication device;
determining, a correspondence of respective measuring results included in the channel measuring result and respective third communication devices, based on the comparing, and
determining the total channel quality score, based on the determined correspondence.

13. The communication method of claim 11 or 12, wherein the channel measuring result includes information indicating channel quality and information indicating a channel occupancy ratio, and wherein determining the total channel quality score comprises:
determining a channel quality score of each channel based on the information indicating the channel quality, the information indicating the channel occupancy ratio, and a base channel rate; and
determining a sum of the channel quality score of each channel as the total channel quality score,
wherein the base channel rate is based on at least one of a number of antennas, a channel bandwidth, and a wireless mode of the third communication device.

14. The communication method of any one of claims 11-13, wherein the first communication device is different from the second communication device, and wherein the method further comprises:
determining that the second communication device supports at least two backhaul links simultaneously, by identifying that a message received from the second communication device indicates at least two neighbor devices and that media access control (MAC) addresses of the at least two neighbor devices are the same; and
determining bands respectively corresponding to the at least two backhaul links, based on the MAC addresses of the second communication device included in the message.

15. A non-transitory computer readable medium storing instructions, when executed by a processor, causing the processor to:
obtain, a channel measuring result of a second communication device on channel(s) used by one or more third communication devices, wherein at least one third communication device uses at least two channels, and wherein the channel measuring result includes measuring results of the at least two channels;
determine a total channel quality score of the channel(s) used by each third communication device, based on the obtained channel measuring result; and
determine, from the one or more third communication devices, a target communication device with which the second communication device establishes a backhaul link, based on the determined total channel quality score.
